# EUROPÄISCHE PATENTANMELDUNG

(11) **EP 3 342 613 A1**
(43) Veröffentlichungstag der Anmeldung: **04.07.2018**
(21) Anmeldenummer: 17206330.7
(22) Anmeldetag: 11.12.2017
(51) Int. Cl.: B60J 10/70

(54) **ABDICHTUNGSPROFIL ZUM VERBINDEN EINES ANBAUTEILS MIT EINER FAHRZEUGSCHEIBE**

(30) Priorität: 28.12.2016 DE 202016107429 U
(71) Anmelder: REHAU AG + Co, 95111 Rehau (DE)
(72) Erfinder: Erhardt, Christian, 95185 Gattendorf (DE)

(57) **Zusammenfassung**

Abdichtungsprofil (1) zum Verbinden eines Anbauteils (2) mit einer Fahrzeugscheibe (3) eines Kraftfahrzeuges, mit einem Halteprofil (4) aufweisend einen Halteabschnitt (5), der an der Fahrzeugscheibe (3) festlegbar oder mit dieser verbindbar ist, einen Aufnahmeabschnitt mit einer Rastausnehmung (6) zur kraft- und/oder formschlüssigen Aufnahme eines Anschlusselements (7) des Anbauteils (2), welches von dem Anbauteil (2) absteht, einen im Montagezustand zwischen Anbauteil (2) und Fahrzeugscheibe (3) angeordneten Stützkörper (8), einen dem Stützkörper (8) bereichsweise gegenüberliegenden Federschenkel (9), wobei die Rastausnehmung (6) von dem Stützkörper (8) und dem Federschenkel (9) gebildet und seitlich begrenzt wird, wobei der Stützkörper (8) und das freien Ende (10) des Federschenkels (9) eine Eintrittsöffnung (E) zu der Rastausnehmung (6) begrenzen, wobei neben der Eintrittsöffnung (E), außerhalb der Rastausnehmung (6) ein auf dem Stützkörper (8) angeordnetes Dichtelement (11) vorgesehen ist, wobei das Dichtelement (11) mindestens zwei durch einen Spalt (12) getrennte und relativ zueinander bewegbare Teilabschnitte (11', 11") aufweist, wobei ein erster Teilabschnitt (11') im Montagezustand von Halteprofil (4) und Anbauteil (2) eine Rastlippe (11') bildet zur fixierenden Anlage an dem Anschlusselement (7) und, wobei ein zweiter Teilabschnitt (11") als Anschlag für den ersten Teilabschnitt (11') dient, wenn das Anschlusselement (7) bei der Montage des Anbauteils (2) die Rastlippe (11') seitlich auslenkt.

## Beschreibung

Vorliegende Erfindung betrifft ein Abdichtungsprofil zum Verbinden eines Anbauteils mit einer Fahrzeugscheibe eines Kraftfahrzeuges, mit einem Halteprofil aufweisend
- einen Halteabschnitt, der an der Fahrzeugscheibe festlegbar oder mit dieser verbindbar ist,
- einen Aufnahmeabschnitt mit einer Rastausnehmung zur kraft- und/oder formschlüssigen Aufnahme eines Anschlusselements des Anbauteils, welches von dem Anbauteil absteht,
- einen im Montagezustand zwischen Anbauteil und Fahrzeugscheibe angeordneten Stützkörper,
- einen dem Stützkörper bereichsweise gegenüberliegender Federschenkel, wobei die Rastausnehmung von dem Stützkörper und dem Federschenkel gebildet und seitlich begrenzt wird, wobei der Stützkörper und das freien Ende des Federschenkels eine Eintrittsöffnung zu der Rastausnehmung begrenzen.

Ein Abdichtungsprofil gemäß des Stands der Technik kann beispielhaft der EP 2 123 497 B1 entnommen werden. Ein Abdichtungsprofil gemäß des Stands der Technik weist eine innerhalb der Rastausnehmung angeordnete Rastlippe, aus einem im Vergleich zu dem Material des Halteprofils weicheren und elastischeren Materials auf, um höhere Demontagekräfte im Vergleich zu den Montagekräften des Anbauteils zu erzielen. Problematisch hieran ist zum einen die Tatsache, dass die Rastlippe bei mehrfacher Demontage und Montage aufgrund ihrer geringeren Festigkeit von dem Anschlusselement abgerissen werden kann.

Aufgabe der vorliegenden Erfindung ist es daher ein Abdichtungsprofil zum Verbinden eines Anbauteils mit einer Fahrzeugscheibe eines Kraftfahrzeuges anzugeben, welches eine erhöhte Sicherheit gegenüber einer Beschädigung aufweist.

Diese Aufgabe wird erfindungsgemäß gelöst durch ein Abdichtungsprofil zum Verbinden eines Anbauteils mit einer Fahrzeugscheibe eines Kraftfahrzeuges, mit einem Halteprofil aufweisend
- einen Halteabschnitt, der an der Fahrzeugscheibe festlegbar oder mit dieser verbindbar ist,
- einen Aufnahmeabschnitt mit einer Rastausnehmung zur kraft- und/oder formschlüssigen Aufnahme eines Anschlusselements des Anbauteils, welches von dem Anbauteil absteht,
- einen im Montagezustand zwischen Anbauteil und Fahrzeugscheibe angeordneten Stützkörper,
- einen dem Stützkörper bereichsweise gegenüberliegenden Federschenkel, wobei die Rastausnehmung von dem Stützkörper und dem Federschenkel gebildet und seitlich begrenzt wird, wobei der Stützkörper und das freien Ende des Federschenkels eine Eintrittsöffnung zu der Rastausnehmung begrenzen,
wobei erfindungsgemäß neben der Eintrittsöffnung, außerhalb der Rastausnehmung ein auf dem Stützkörper angeordnetes Dichtelement vorgesehen ist, wobei das Dichtelement mindestens zwei durch einen Spalt getrennte und relativ zueinander bewegbare Teilabschnitte aufweist, wobei ein erster Teilabschnitt im Montagezustand von Halteprofil und Anbauteil eine Rastlippe bildet zur fixierenden Anlage an dem Anschlusselement und, wobei ein zweiter Teilabschnitt als Anschlag für den ersten Teilabschnitt dient, wenn das Anschlusselement bei der Montage des Anbauteils die Rastlippe seitlich auslenkt.

Das erfindungsgemäße Vorsehen eines geteilten Dichtelements neben der Eintrittsöffnung zu der Rastausnehmung ermöglicht es, im Vergleich zu einem Abdichtungsprofil gemäß dem Stand der Technik, die Montagekräfte zu senken und die durch Stützkörper und Federschenkel definierten Demontagekräfte auf einem gleichbleibenden Niveau zu belassen. Die durch den ersten Teilabschnitt gebildete Rastlippe weicht hierzu bei der Montage des Anschlusselementes seitlich aus und schließt den Spalt. Hierbei trägt die Rastlippe nicht zu einer Erhöhung der Montagekräfte bei, sondern die Rastlippe dient als Montagehilfe und bildet eine die Kräfte reduzierende Einführschräge aus. Hierfür stützt sich die Rastlippe bzw. der erste Teilabschnitt an dem zweiten Teilabschnitt ab.

Die Teilabschnitte sind bevorzugt miteinander einstückig hergestellt. Gemeinsam bilden die Teilabschnitte das Dichtelement aus.

Das Dichtelement kann insbesondere aus mindestens einem federelastischen Material hergestellt sein, sodass die Teilabschnitte von einem entspannten Ausgangszustand ausgehend durch Krafteinwirkung von außen relativ zueinander in einen Zwischenzustand überführbar sind und von dem Zwischenzustand ausgehend durch Wirken von Rückstellkräften des federelastischen Materials selbsttätig in Richtung Ausgangszustand zurückformbar sind. Das federelastische Material kann insbesondere ein thermoplastisches Elastomer oder Weich-PVC oder EPDM oder EM-PP umfassen.

Der Federschenkel kann L-förmig, U-förmig, V-förmig oder Hakenförmigen ausgebildet sein.

Bevorzugt ist das Halteprofil als extrudiertes Strangpressprofil ausgebildet. Das Halteprofil besteht bevorzugt aus einem polymeren Werkstoff. Der polymere Werkstoff umfasst bevorzugt ein Polyolefin, insbesondere ein Polypropylen oder ein Polyethylen.

Das Anbauteil kann insbesondere ein Wasserkasten oder eine Wasserkastenabdeckung sein.

Teil der Erfindung ist ferner eine Abdichtungsanordnung mit
- einer Fahrzeugscheibe eines Kraftfahrzeuges,
- einem Anbauteil mit einem Anschlusselement und
- einem zwischen Fahrzeugscheibe und Anteilbau angeordneten, vorstehend beschriebenen Abdichtungsprofil zum Anschluss des Anbauteils an die Scheibe.

Am Stützkörper kann ein Dichtungskörper vorgesehen sein, der im Montagezustand zumindest an der Fahrzeugscheibe dichtend anliegt.

Im Folgenden wird die Erfindung anhand lediglich Ausführungsbeispiele darstellenden Figuren näher erläutert. Gleiche oder funktionsgleiche Elemente sind mit den gleichen Bezugszeichen versehen.

Es zeigen:

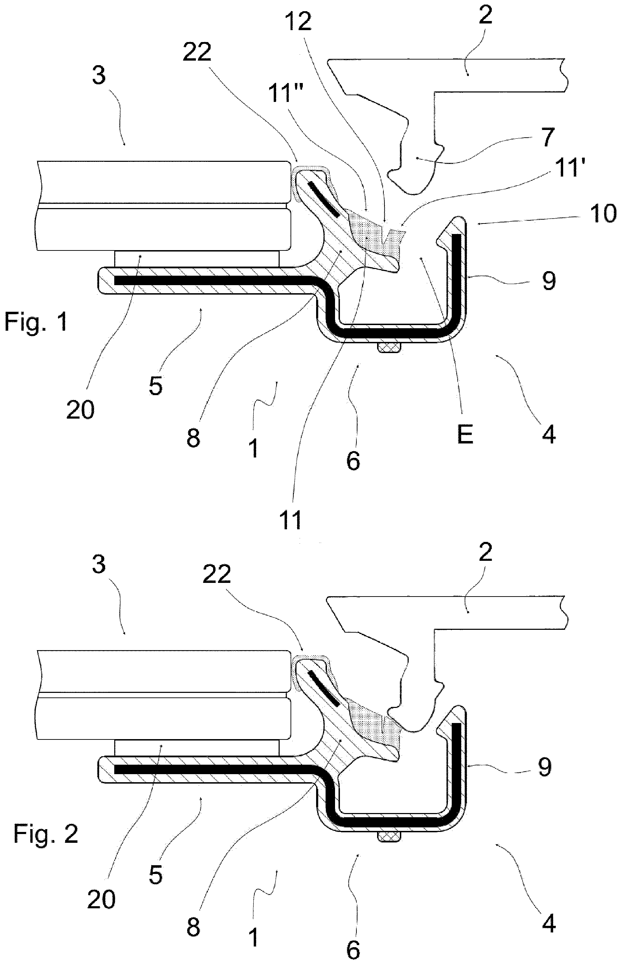

- Fig. 1 bis Fig. 5:: ein Abdichtungsprofil / eine Abdichtungsanordnung in verschiedenen Stadien der Montage und Demontage des Anbauteils.

Die Fig. 1 bis Fig. 5 zeigt ein Abdichtungsprofil 1 zum Verbinden eines Anbauteils 2 mit einer Fahrzeugscheibe 3 eines Kraftfahrzeuges, mit einem Halteprofil 4 aufweisend einen Halteabschnitt 5, der an der Fahrzeugscheibe 3 festlegbar oder mit dieser verbindbar ist, und aufweisend einen Aufnahmeabschnitt mit einer Rastausnehmung 6 zur kraft- und/oder form-schlüssigen Aufnahme eines Anschlusselements 7 des Anbauteils 2, welches von dem Anbauteil 2 absteht.

Das Halteprofil 4 weist zudem einen im Montagezustand zwischen Anbauteil 2 und Fahrzeugscheibe 3 angeordneten Stützkörper 8 auf.

Das Halteprofil 4 weist ferner einen dem Stützkörper 8 bereichsweise gegenüberliegenden Federschenkel 9 auf, wobei die Rastausnehmung 6 von dem Stützkörper 8 und dem Federschenkel 9 gebildet und seitlich begrenzt wird, wobei der Stützkörper 8 und das freien Ende 10 des Federschenkels 9 eine Eintrittsöffnung E zu der Rastausnehmung 6 begrenzen.

Neben der Eintrittsöffnung E, außerhalb der Rastausnehmung 6 ist ein auf dem Stützkörper 8 angeordnetes Dichtelement 11 vorgesehen, wobei das Dichtelement 11 mindestens zwei durch einen Spalt 12 getrennte und relativ zueinander bewegbare Teilabschnitte 11', 11" aufweist (vgl. Fig. 1).

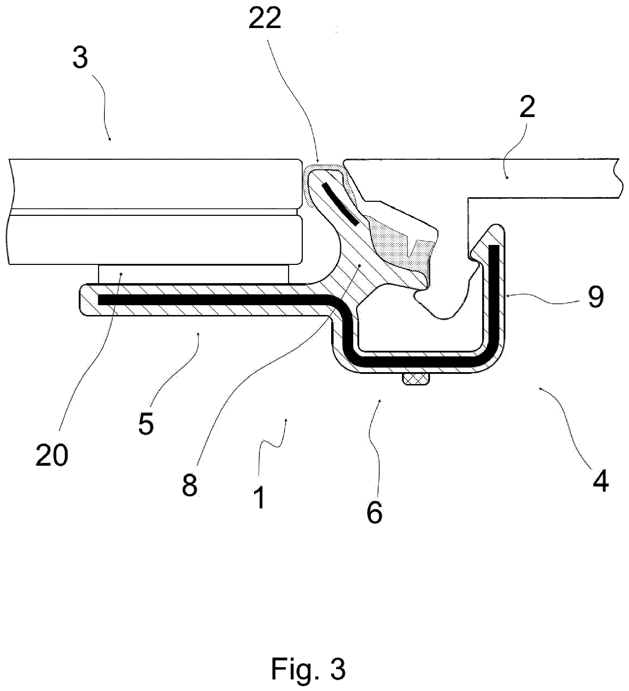

Ein erster Teilabschnitt 11' bildet im Montagezustand von Halteprofil 4 und Anbauteil 2 eine Rastlippe 11' zur fixierenden Anlage an dem Anschlusselement 7 (vgl. Fig. 3).

Ein zweiter Teilabschnitt 11" dient als Anschlag für den ersten Teilabschnitt 11', wenn das Anschlusselement 7 bei der Montage des Anbauteils 2 die Rastlippe 11' seitlich auslenkt (vgl. Fig. 2). Hierbei fungiert der erste Teilabschnitt 11' bzw. die Rastlippe 11' als Einführschräge für das Anschlusselement 7 des Anbauteils 2.

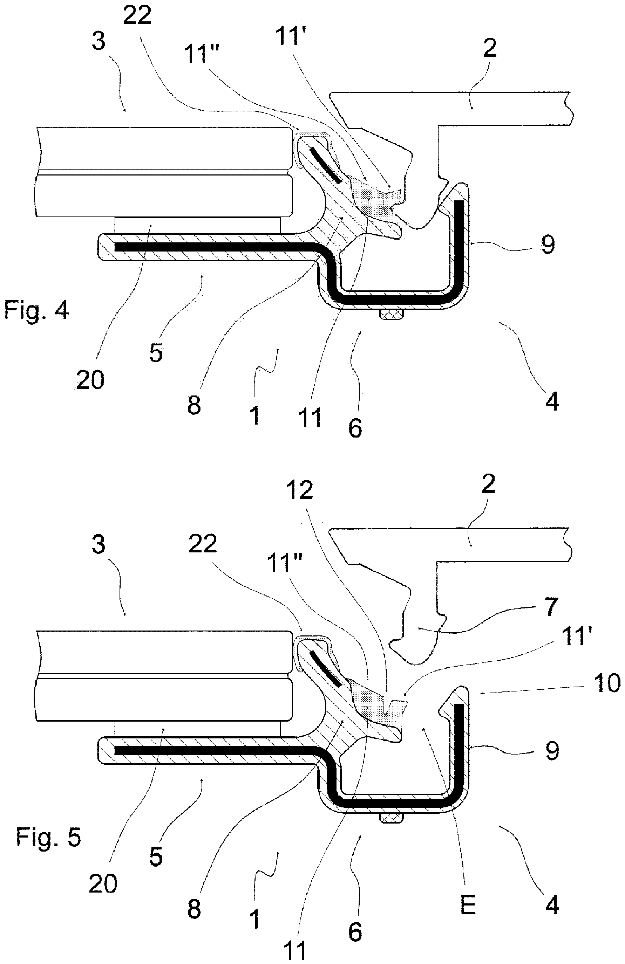

Wie in Fig. 4 ersichtlich kann das Anschlusselement 7 die Rastlippe 11' bzw. den ersten Teilabschnitt 11' bei der Demontage seitlich auslenken.

Die Teilabschnitte 11', 11" sind miteinander einstückig hergestellt. Das Dichtelement 11 ist aus mindestens einem federelastischen Material hergestellt, sodass die Teilabschnitte 11', 11" von einem entspannten Ausgangszustand ausgehend durch Krafteinwirkung von außen relativ zueinander in einen Zwischenzustand überführbar sind und von dem Zwischenzustand ausgehend durch Wirken von Rückstellkräften des federelastischen Materials selbsttätig in Richtung Ausgangszustand zurückformbar sind. Das federelastische Material kann insbesondere ein thermoplastisches Elastomer oder Weich-PVC oder EPDM oder EM-PP umfassen.

Der Federschenkel 9 ist L-förmig ausgebildet. Das Halteprofil 4 ist als extrudiertes Strangpressprofil ausgebildet. Das Anbauteil 2 ist ein Wasserkasten oder eine Wasserkastenabdeckung.

Der Halteabschnitt 5 ist mit der Unterseite der Fahrzeugscheibe 3 über eine Klebstoffschicht 20 und/oder über ein doppelseitiges Klebeband 20 verbunden
Das Anbauteil 2 ist ein Wasserkasten oder eine Wasserkastenabdeckung.

Am Stützkörper 8 ist ein Dichtungskörper 22 vorgesehen, der im Montagezustand zumindest an der Fahrzeugscheibe 3 dichtend anliegt.

In den Fig. 1 bis 5 dargestellt ist die Abdichtungsanordnung mit einer Fahrzeugscheibe 3 eines Kraftfahrzeugs, mit einem Anbauteil 2 und mit einem zwischen Fahrzeugscheibe 3 und Anbauteil 2 angeordneten Abdichtungsprofil 1, wie vorstehend beschrieben, zum Anschluss des Anbauteils 2 an die Fahrzeugscheibe 3.

## Patentansprüche

1. Abdichtungsprofil (1) zum Verbinden eines Anbauteils (2) mit einer Fahrzeugscheibe (3) eines Kraftfahrzeuges, mit einem Halteprofil (4) aufweisend
- einen Halteabschnitt (5), der an der Fahrzeugscheibe (3) festlegbar oder mit dieser verbindbar ist,
- einen Aufnahmeabschnitt mit einer Rastausnehmung (6) zur kraft- und/oder form-schlüssigen Aufnahme eines Anschlusselements (7) des Anbauteils (2), welches von dem Anbauteil (2) absteht,
- einen im Montagezustand zwischen Anbauteil (2) und Fahrzeugscheibe (3) angeordneten Stützkörper (8),
- einen dem Stützkörper (8) bereichsweise gegenüberliegenden Federschenkel (9), wobei die Rastausnehmung (6) von dem Stützkörper (8) und dem Federschenkel (9) gebildet und seitlich begrenzt wird, wobei der Stützkörper (8) und das freien Ende (10) des Federschenkels (9) eine Eintrittsöffnung (E) zu der Rastausnehmung (6) begrenzen,
**dadurch gekennzeichnet, dass**
neben der Eintrittsöffnung (E), außerhalb der Rastausnehmung (6) ein auf dem Stützkörper (8) angeordnetes Dichtelement (11) vorgesehen ist, wobei das Dichtelement (11) mindestens zwei durch einen Spalt (12) getrennte und relativ zueinander bewegbare Teilabschnitte (11', 11") aufweist, wobei ein erster Teilabschnitt (11') im Montagezustand von Halteprofil (4) und Anbauteil (2) eine Rastlippe (11') bildet zur fixierenden Anlage an dem Anschlusselement (7) und, wobei ein zweiter Teilabschnitt (11") als Anschlag für den ersten Teilabschnitt (11') dient, wenn das Anschlusselement (7) bei der Montage des Anbauteils (2) die Rastlippe (11') seitlich auslenkt.

2. Abdichtungsprofil (1) nach Anspruch 1, **dadurch gekennzeichnet, dass** die Teilabschnitte (11', 11") miteinander einstückig hergestellt sind.

3. Abdichtungsprofil (1) nach einem der vorstehenden Ansprüche, **dadurch gekennzeichnet, dass** das Dichtelement (11) aus mindestens einem federelastischen Material hergestellt ist, sodass die Teilabschnitte (11', 11") von einem entspannten Ausgangszustand ausgehend durch Krafteinwirkung von außen relativ zueinander in einen Zwischenzustand überführbar sind und von dem Zwischenzustand ausgehend durch Wirken von Rückstellkräften des federelastischen Materials selbsttätig in Richtung Ausgangszustand zurückformbar sind.

4. Abdichtungsprofil (1) nach einem der vorstehenden Ansprüche, **dadurch gekennzeichnet, dass** der Federschenkel (9) L-förmig, U-förmig, V-förmig oder Hakenförmigen ausgebildet ist.

5. Abdichtungsprofil (1) nach einem der vorstehenden Ansprüche, **dadurch gekennzeichnet, dass** das Halteprofil (4) als extrudiertes Strangpressprofil ausgebildet ist.

6. Abdichtungsprofil (1) nach einem der vorstehenden Ansprüche, **dadurch gekennzeichnet, dass** das Anbauteil (2) ein Wasserkasten oder eine Wasserkastenabdeckung ist.

7. Abdichtungsanordnung mit
- einer Fahrzeugscheibe (3) eines Kraftfahrzeugs,
- einem Anbauteil (2) und
- einem zwischen Fahrzeugscheibe (3) und Anbauteil (2) angeordneten Abdichtungsprofil (1) nach einem der Ansprüche 1 bis 6 zum Anschluss des Anbauteils (2) an die Fahrzeugscheibe (3).
